# EUROPÄISCHE PATENTSCHRIFT

(11) **EP 3 340 922 B1**
(45) Veröffentlichungstag und Bekanntmachung des Hinweises auf die Patenterteilung: **30.09.2020**
(21) Anmeldenummer: 16790520.7
(22) Anmeldetag: 26.10.2016
(51) Int. Cl.: A61C 8/00

(54) **VERFAHREN UND WERKZEUG ZUR HERSTELLUNG EINER ZAHNIMPLANTATVORRICHTUNG SOWIE EINE HIERDURCH HERGESTELLTE ZAHNIMPLANTATVORRICHTUNG**
METHOD AND TOOL FOR PRODUCING A DENTAL IMPLANT DEVICE AND A DENTAL IMPLANT DEVICE PRODUCED IN THIS WAY
PROCÉDÉ ET OUTIL DE FABRICATION D'UN DISPOSITIF D'IMPLANT DENTAIRE AINSI QUE DISPOSITIF D'IMPLANT DENTAIRE AINSI FABRIQUÉ

(30) Priorität: 19.11.2015 DE 102015015080; 15.12.2015 DE 102015016254
(43) Veröffentlichungstag der Anmeldung: 04.07.2018
(73) Patentinhaber: Cera M GmbH, 97877 Wertheim (DE)
(72) Erfinder: RIES, Stefan, 97877 Wertheim (DE); LUTZ, Walter, 97877 Wertheim (DE)
(74) Vertreter: Thoma, Michael
(86) Internationale Anmeldenummer: PCT/EP2016/001781
(87) Internationale Veröffentlichungsnummer: WO 2017/084735

(56) Entgegenhaltungen:
- WO-A1-2005/044133
- DE-A1-102009 057 754
- US-A1- 2004 259 056

## Beschreibung

Die vorliegende Erfindung betrifft ein Verfahren zur Herstellung einer Zahnimplantatvorrichtung, die ein Implantat und einen Implantataufbau umfasst, die mittels Anlageflächen aneinandersetzbar sind und integral einstückig angeformte, zueinander passende Verdrehsicherungskonturen besitzen, die im aneinandergesetzten Zustand ein Verdrehen von Implantat und Implantataufbau zu einander verhindern. Die Erfindung betrifft ferner ein Implantatsystem umfassend eine solche Zahnimplantatvorrichtung sowie ein Schleifwerkzeugsystem zum Einschleifen dieser Zahnimplantatvorrichtung.

Zwei- oder mehrteilige Implantatsysteme, die das eigentliche Implantat und einen daran ansetzbaren Implantataufbau, insbesondere das sogenannte Implantatabutment umfassen können, vgl. US 2004/0259056 A1, sind regelmäßig aus spröden Materialien wie z.B. Keramik oder Zirconoxid oder Werkstoffen mit ähnlichen physikalischen Eigenschaften gefertigt, sodass die Teile des Implantatsystems an ihren Fügestellen exakt aufeinander abzustimmen sind, um eine hohe Stabilität zu erzielen und punktuelle Überbelastungen, die zu Beschädigungen wie beispielsweise Sprödbruch oder Oberflächenausbrüchen führen können, zu vermeiden.

Aus der DE 10 2009 057 754 A1 ist beispielsweise ein Zahnimplantatsystem bekannt, dessen Implantat und Implantataufbau an ihren Berührungs- bzw. Anlageflächen gegeneinander verschliffen sind. Ein solches gegenseitiges Verschleifen unter Zuhilfenahme einer Schleifpaste kann produktionsbedingte Oberflächenunebenheiten beseitigen, sodass eine gleichmäßigere Anlagerung der Anlageflächen aneinander erzielt werden kann. Hierdurch können Spannungsspitzen minimiert und die Bruchstabilität der miteinander verbundenen Implantatsystemteile erhöht werden. Um bei diesem bekannten Implantatsystem nach dem Stand der Technik eine eindeutige Positionierbarkeit der beiden Komponenten realisieren zu können, werden die beiden Bauteile, d.h. das Implantat und der Implantataufbau durch einen Verdrehschutz gegen Verdrehen zueinander gesichert. Da dieser Verdrehschutz das gegenseitige einschleifen der Anlageflächen des Implantats und des Implantataufbaus verhindern würde, wird der Rotationsschutz erst nachträglich, d.h. nach dem Arbeitsgang des Verschleifens, als zusätzliches Bauteil angebracht. Ein solcher nachträglich hinzugefügter Rotationsschutz bringt jedoch verschiedene andere Nachteile mit sich. Bauartbedingt ist ein solcher Rotationsschutz sehr klein. Trotzdem muss der Rotationsschutz aufgrund hoher mechanischer Belastungen durch die Kaukräfte eine hohe mechanische Stabilität aufweisen. Ergänzend kommt hinzu, dass durch die geringe Größe des Bauteils das Handling, insbesondere im Mund schwierig wird.

Insofern sind Implantatvorrichtungen, deren Implantat und Implantataufbau einstückig angeformte Verdrehsicherungen besitzen, deutlich im Vorteil. Aus dem Stand der Technik sind Implantatsysteme bekannt, bei denen die aufeinander zu fügenden Implantatbauteile ineinander greifende Verdrehsicherungskonturen besitzen beispielsweise in Form eines vorspringenden Sechseckstumpfs und einer damit korrespondierenden Sechseckausnehmung, die beim Aufeinandersetzen der Implantatbauteile ineinander greifen und diese hierdurch gegen Verdrehen sichern. Solche innenschlüssigen Verbindungen können auch andere nichtrotationssymmetrische Konturgeometrien besitzen und sind im Wesentlichen dadurch charakterisiert, dass eine nichtrotationssymmetrische Positivkontur in eine dazu korrespondierende Negativform am anderen Bauteil trifft. Andererseits sind auch außenschlüssige Verbindungen bekannt, bei denen eine außenseitige Verdrehsicherungskontur bzw. die Positivform des Implantatkopfs auf eine hierzu formangepasste Negativform am Implantataufbau trifft.

Bei solchen Implantatvorrichtungen, deren Implantat und Implantataufbau bereits angeformte Verdrehsicherungskonturen besitzen, ist jedoch ein gegenseitiges Verschleifen der Anlageflächen nicht möglich, da dies die ineinandergreifenden Verdrehsicherungskonturen verhindern. Beim Aneinandersetzen von Implantat und Implantataufbau, sodass die Anlageflächen einander berühren und gegeneinander verschliffen werden könnten, geraten gleichzeitig die Verdrehsicherungskonturen in Eingriff miteinander, sodass jedwede Schleifbewegung des Implantats relativ zum Implantataufbau verhindert ist.

Hiervon ausgehend liegt der vorliegenden Erfindung die Aufgabe zugrunde, ein verbessertes Verfahren zur Herstellung einer Zahnimplantatvorrichtung, ein Werkzeug für ein solches Verfahren und eine verbesserte Zahnimplantatvorrichtung zu schaffen, die Nachteile des Standes der Technik vermeiden und letzteren in vorteilhafter Weise weiterbilden. Insbesondere soll an den aufeinandersitzenden Anlageflächen des Implantats und des Implantataufsatzes eine gleichmäßige, harmonische Kraftübertragung und Flächenpressung ohne Spannungsspitzen erreicht werden und gleichzeitig eine Verdrehsicherung vorgesehen werden, ohne dies durch mühsames Anbringen einer separaten Verdrehsicherung erkaufen zu müssen.

Erfindungsgemäß wird die genannte Aufgabe durch ein Verfahren zur Herstellung einer Zahnimplantatvorrichtung gemäß Patentanspruch 1 und ein Implantatsystem gemäß Anspruch 7 gelöst.

Es wird also vorgeschlagen, die Anlagefläche des Implantats und die damit korrespondierende Anlagefläche des Implantataufbaus zu verschleifen, dabei jedoch eine am Implantat bereits vorgesehene Verdrehsicherungskontur und eine damit korrespondierende Verdrehsicherungskur am Implantataufbau auszusparen. Hierdurch können die Anlageflächen exakt zueinander formangepasst werden, während die Verdrehsicherungskonturen auch ohne eine solche exakte Formanpassung durch Einschleifen ausreichend funktionieren können, da hier beispielsweise übermäßige punktuelle Belastungen durch eine großzügigere Größenabstimmung, die Presspassungen vermeidet, verhindert werden können, ohne die Verdrehsicherungsfunktion zu beeinträchtigen.

Erfindungsgemäß wird die Anlagefläche des Implantats mit eine ersten Schleiflehre eingeschliffen, die eine Schleiffläche mit der Form der Anlagefläche des Implantataufsatzes besitzt und die Verdrehsicherungskontur des Implantats ausspart, während die Anlagefläche des Implantataufbaus mit einer zweiten Schleiflehre eingeschliffen wird, die eine Schleiffläche mit der Form der Anlagefläche des Implantats besitzt und die Verdrehsicherungskontur des Implantataufbaus ausspart.

Insbesondere kann also das Implantat mit einer Schleiflehre eingeschliffen werden, die hinsichtlich der Form seiner Schleiffläche der Anlagefläche des Implantataufbaus entspricht, jedoch nicht dessen Verdrehsicherungskontur besitzt, sodass die Schleifbewegung zwischen Schleiflehre und Implantat nicht blockiert ist. Umgekehrt kann der Implantataufbau mit einer Schleiflehre eingeschliffen werden, deren Schleiffläche im Wesentlichen der Anlagefläche des Implantats entspricht, jedoch nicht die Verdrehsicherungskontur des Implantats aufweist, sodass eine Schleifbewegung zwischen Schleiflehre und Implantataufbau nicht blockiert ist.

Insbesondere kann die Schleiflehre derart ausgebildet und/oder konturiert sein, dass das Schleifwerkzeug nur die Anlagefläche des Implantats bzw. die Anlagefläche des Implantataufbaus berührt, nicht jedoch die rotationshemmenden Konturen des einzuschleifenden Bauteils berührt. Im Bereich der rotationshemmenden Konturen ist die Schleiflehre ausreichend weit ausgespart, sodass die Schleiflehre gegenüber dem Implantat bzw. gegenüber dem Implantataufbau schleifend bewegt werden kann, auch wenn die Schleiffläche der Schleiflehre mit der Anlagefläche des Implantats bzw. der Anlagefläche des Implantataufbaus in fester, insbesondere vollflächiger Berührung steht.

Vorteilhafterweise werden die Schleiflehren zum Einschleifen des Implantats bzw. zum Einschleifen des Implantataufbaus jeweils nur einmal verwendet. Durch Verwendung jeweils einer neuen Schleiflehre zum Einschleifen eines jeden Implantats und eines jeden Implantataufbaus können Formabweichungen vermieden werden, die durch Verschleiß der Schleiflehre entstehen. Das jeweilige Einschleifwerkzeug erfährt beim Einschleifen eines Bauteils eine gewisse Abnutzung an der Schleifoberfläche, die zu Formtoleranzen führen kann. Somit können sich Formänderungen an dem Betrag des Werkzeugabtrages bzw. des Verschleißes der Schleiflehre nicht auf das Werkstück, d.h. das Implantat oder den Implantataufbau übertragen, wenn jedes mal eine neue Schleiflehre verwendet wird.

Wird indes jede Schleiflehre nur einmal verwendet, kann eine sehr hohe Präzision im Bereich der Anlageflächen über eine große Stückzahl von Implantatbauteilen gewährleistet werden, da der Abtrag sowohl am Implantatbauteil als auch am Schleifwerkzeug immer konstant bleibt.

Gegebenenfalls können die Schleiflehren jedoch auch mehrfach verwendet werden, insbesondere wenn das Einschleifwerkzeug bei einem oder mehreren vorhergehenden Einschleifvorgängen keinen allzu großen Abtrag und Verschleiß erfahren hat. Mit einer beispielsweise drei- bis fünffachen Verwendung der Schleiflehren kann ein guter Kompromiss zwischen hoher Präzision der Anlageflächen und wirtschaftlicher Nutzung der Schleiflehren erzielt werden. Je nach auftretender Abnutzung der Schleiflehren kann individuell entschieden werden, wie oft eine Schleiflehre benutzt und wann eine neue Schleiflehre eingesetzt wird.

In vorteilhafter Weiterbildung der Erfindung werden dabei Schleiflehren aus einem Material verwendet, das dem Material des einzuschleifenden Implantats bzw. dem Material des einzuschleifenden Implantataufbaus entspricht. Hierbei kann es vorteilhaft sein, wenn die Schleiflehre und das einzuschleifende Bauteil aus dem selben Material sind, also das Implantat mit einer Schleiflehre aus dem Material des Implantats eingeschliffen und umgekehrt der Implantataufbau mit einer Schleiflehre aus dem Material des Implantataufbaus eingeschliffen wird. Um beim Einschleifen jedoch die tatsächliche Flächenpressungsverhältnisse möglichst identisch zu simulieren, kann es auch vorteilhaft sein, das Implantat mit einer Schleiflehre aus dem Material des Implantataufbaus einzuschleifen und/ oder umgekehrt den Implantataufbau mit einer Schleiflehre aus dem Material des Implantats einzuschleifen. Bestehen Implantat und Implantataufbau aus dem selben Material, spielt dies natürlich keine Rolle, wenn jedoch Implantat und Implantataufbau verschiedene Materialzusammensetzungen besitzen, kann dies vorteilhaft sein.

Das Einschleifen kann grundsätzlich mit verschiedenen Schleifbewegungen realisiert werden, wobei die Schleifbewegung an die Form der jeweils einzuschleifenden Anlagefläche angepasst sein kann.

Gemäß einer vorteilhaften Weiterbildung der Erfindung können die Anlageflächen der Implantatbauteile rotatorisch eingeschliffen werden, wobei das Schleifwerkzeug bzw. die Schleiflehre vorteilhafterweise relativ zum Bauteil um die Verdrehsicherungsachse verdreht werden kann, das heißt die Relativbewegung zwischen Schleiflehre und Implantat- bzw. Implantataufbau erfolgt um eine Schleifdrehachse, die im wesentlichen koaxial - gegebenenfalls mit geringfügigen Winkelabweichungen oder Versatz - der Achse entspricht, bezüglich derer die ineinander greifenden Verdrehsicherungskonturen das Verdrehen verhindern würden. Ist beispielsweise als Verdrehsicherung ein Sechskantstumpf und Sechskantausnehmung vorgesehen, kann die Schleifdrehachse der zentralen Längsachse des Sechskantstumpfs bzw. der zentralen Längsachse der Sechskantausnehmungen entsprechen.

Je nach einzuschleifender Anlagefläche kann jedoch alternativ oder zusätzlich zu einer solchen rotatorischen Schleifbewegung auch eine andere Schleifbewegung Verwendung finden. Werden beispielsweise zylindrische Anlageflächen eingeschliffen, kann ähnlich dem Honen einer rotatorischen Schleifbewegung eine axiale Schleifbewegung überlagert werden, das heißt das Schleifwerkzeug kann verdreht und entlang der Verdrehachse hin- und her bewegt werden. Grundsätzlich sind auch andere Schleifbewegungen, beispielsweise Entlangführen des Schleifwerkzeugs entlang eines Kreises und zusätzlich überlagerter Drehbewegung um sich selbst und andere Schleifbewegungen möglich.

Die einzuschleifenden Anlageflächen des Implantats und des zugehörigen Implantataufbaus können grundsätzlich verschieden geformt und dimensioniert sein. Um eine rotatorische Einschleifbewegung zu ermöglichen, können die Anlageflächen vorteilhafterweise rotationssymmetrisch ausgebildet sein, insbesondere rotationssymmetrisch bezüglich der Verdrehsicherungsachse der Verdrehsicherungskontur. Insbesondere können beispielsweise konische Anlageflächen und/oder plane Anlageflächen und/oder zylindrische Anlageflächen, aber auch kompliziertere Anlageflächen beispielsweis in Form eiförmiger oder ellipsoidförmiger Anlageflächen vorgesehen werden.

Vorteilhafterweise kann sich eine Symmetrieachse der jeweiligen Anlagefläche koaxial zur Verdrehsicherungsachse der Verdrehsicherungskontur erstrecken. Umfasst beispielsweise das Implantat oder der Implantataufbau eine konische Anlagefläche beispielsweise in Form einer konischen Ausnehmung und eine Drehsicherungskontur beispielsweise in Form eines Innensechskants, kann die Konuslängsachse koaxial zur Innensechskantachse angeordnet sein.

Die Erfindung wird nachfolgend anhand eines vorteilhaften Ausführungsbeispiels und zugehöriger Zeichnungen näher erläutert. In der Zeichnung zeigt:

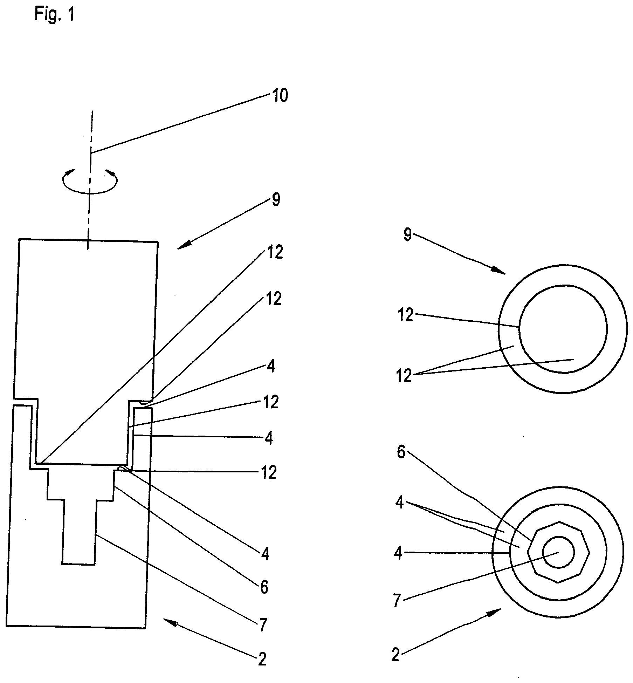

- Fig. 1: eine schematische Darstellung des Einschleifens eines Implantats mit einer ersten Schleiflehre, die die Verdrehsicherungskonturen des Implantats ausspart und nur die Anlagefläche des Implantats einschleift, wobei die Teilansicht (a) in Gesamtansicht die an das Implantat angesetzte Schleiflehre und das Implantat zeigt, die Teilansicht (b) eine stirnseitige Draufsicht auf die Schleiflehre und deren Schleiffläche zeigt und die Teilansicht (c) eine stirnseitige Draufsicht auf das Implantat zeigt, die die zylindrische oder konische Anlagefläche und die tiefer gesetzte Verdrehsicherungskontur und die Schrauben-Aufnahmebohrung zeigt,

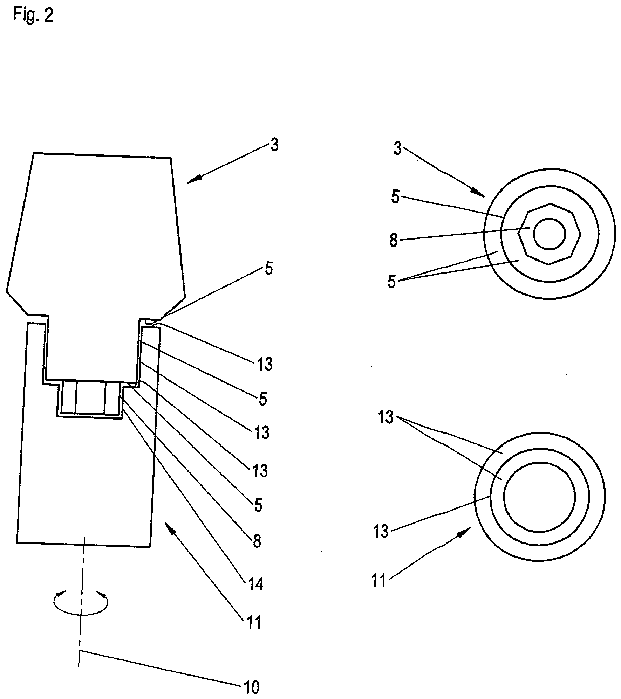

- Fig. 2: eine schematische Darstellung des Einschleifens des Implantataufbaus, wobei die Teilansicht (a) in Gesamtansicht die an den Implantataufbau angesetzte Schleiflehre zeigt, die Teilansicht (b) eine stirnseitige Draufsicht auf den Implantataufbau und dessen Verdrehsicherungskontur und Anlagefläche zeigt und die Teilansicht (c) eine stirnseitige Draufsicht auf die Schleiflehre zeigt, und

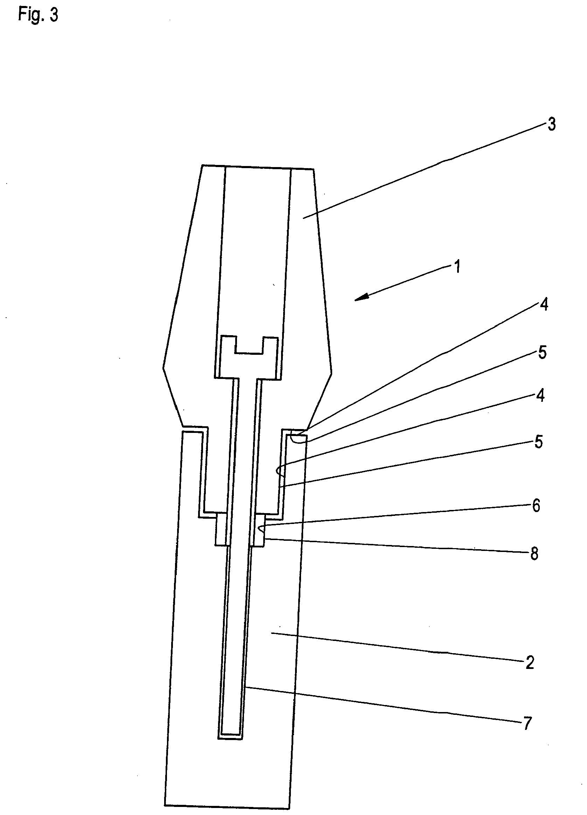

- Fig. 3: eine schematische Darstellung des eingeschliffenen Implantats und des eingeschliffenen Implantataufbaus im aneinandergesetzten Zustand.

Wie die Figur 3 zeigt, kann die Implantatvorrichtung 1 ein Implantat 2 umfassen, das passgenau mit einem Implantataufbau 3 verbunden werden kann. Das Implantat 2 kann beispielsweise in Form einer Implantatschraube oder auch in anderer Form ausgebildet sein, um für einen Zahnersatz in einem Kiefer implantiert zu werden, wobei in der Zeichnung ein beispielsweise etwa zylindrischer Implantatkorpus dargestellt ist. Der Implantataufbau 3 kann ebenfalls in an sich bekannter Weise einem Zahn oder auch nur einem Zahnträger entsprechen, auf dem dann ein weiterer Korpus aufgesetzt werden kann, wobei in den Zeichnungen ein ebenfalls näherungsweise zylindrischer Aufbaukorpus dargestellt ist.

Wie Figur 3 und auch in Vergleich der Figuren 1 und 2 zeigt, besitzen das Implantat 2 und der Implantataufbau 3 jeweils eine Anlagefläche 4 bzw. 5, die aneinander formangepasst sind und zu einander komplentär ausgebildet sein können. Beispielsweise kann die Anlagefläche 4 des Implantats 2 eine zylindrische und/oder konische Innenmantelfläche und/oder eine ebene Ringfläche, die sich im wesentlichen quer zur Längsachse des Implantats erstrecken kann, aufweisen, wobei auch mehrerer solcher ebener Ringflächen vorgesehen sein können, beispielsweise oben und unten kragenartig an die konische oder zylindrische Mantelfläche anschließen können.

Der Implantataufbau 3 kann in entsprechender Weise eine Anlagefläche 5 aufweisen, die beispielsweise als zylindrischer oder konischer Kegelstumpf ausgebildet sein kann, insbesondere also ein zylindrisches oder konisches Außenmantelflächenstück aufweisen kann und/oder im wesentlichen ebene Ringflächenstücke umfassen kann.

Grundsätzlich können die Anlageflächen aber auch umgekehrt ausgebildet sein, beispielsweise kann das Implantat einen zylindrischen oder kegelförmigen Anlageflächenstumpf aufweisen und der Implantataufbau eine zylindrische oder konische Anlageflächenausnehmung umfassen. Alternativ oder zusätzlich können die Anlageflächen auch in anderer Weise konturiert sein.

Insbesondere können die Anlageflächen derart ausgebildet und aufeinander abgestimmt sein, dass sie axiale. D.h. in Kaukraftrichtung wirkende Kräfte und/ oder Querkräfte übertragen und/oder ein Verkippen der Implantatteile zueinander verhindern.

Zusätzlich zu der Anlagefläche 4 umfasst das Implantat 2 eine Verdrehsicherungskontur 6, die beispielsweise als Innenschlußfläche ausgebildet sein kann und koaxial zu der Anlagefläche 4 angeordnet sein kann. Beispielsweise kann eine Innensechskantausnehmung als Verdrehsicherungskontur 6 vorgesehen sein, die an die zylindrische oder konische Anlagefläche 4 anschließt bzw. tiefer im Inneren des Implantats 2 angeordnet ist. Ferner kann das Implantat 2 eine Schraubausnehmung 7 aufweisen, in der eine Schraube fixiert werden kann, die den Implantataufbau 3 an das Implantat 2 fixieren kann.

Wie Figur 2 zeigt, kann der Implantaufbau 3 zu der Verdrehsicherungskontur 6 des Implantats 2 korrespondierend eine Verdrehsicherungskontur 8 aufweisen, die in Form eines Sechskantstumpfs ausgebildet sein kann, der in den Innensechskant des Implantats 2 eingreifen und hierdurch den Implantataufbau 2 gegenüber dem Implantat 2 verdrehsichern kann. Es versteht sich jedoch, dass auch andere Verdrehsicherungskonturen 6 und 8 vorgesehen sein können, die von einer kreisrunden Form bzw. einer Kreiszylinderform abweichen, beispielsweise in Form eines oktagonalen oder eines in anderer Weise geformten Konturabschnitts. Insbesondere können die Verdrehsicherungskonturen 6 und 8 dazu ausgebildet sein, ein Verdrehen um eine Verdrehachse 10, die sich parallel zur Kaukraftrichtung zentral und die Implantatteile umschließt, zu verhindern.

Wie Figur 1 zeigt, wird zum Einschleifen der Anlagefläche 4 des Implantats 2 eine Schleiflehre 9 versendet, die aus demselben Material wie das Implantat 2 bzw. aus dem Material des Implantaufbaus 3 bestehen kann und im wesentlichen hinsichtlich seiner Form dem Implantataufbau 3 entspricht, jedoch nicht dessen Verdrehsicherungskontur 8 besitzt, das heißt die Schleiflehre 9 umfasst zwar den zylindrischen oder konischen Anlageflächenstumpf des Implantataufbaus 3, nicht jedoch dessen Sechskantstumpf, der die Verdrehsicherungskontur 8 bildet.

Um das Implantat 2 einzuschleifen, werden die Schleiflehre 9 und das Implantat 2 axial aneinder gedrückt und/oder relativ zueiander verdreht, und zwar um die Verdrehsicherungsachse 10 der Verdrehsicherungskontur 6, die einer Hauptachse bzw. einer Längsachse oder einer zentralen Mittelachse des Implantats 2 entsprechen kann.

Wie Figur 2 zeigt, wird zum Einschleifen des Implantataufbaus 3 eine Schleiflehre 11 verwendet, deren Schleiffläche 13 im wesentlichen der Anlagefläche 4 des Implantats 2 entspricht, wobei die Schleiflehre 11 jedoch nicht die Verdrehsicherungskontur 6 des Implantats 2 besitzt, sondern die Verdrehsicherungskontur des Implantataufbaus 3 ausspart. Hierzu kann das Schleifwerkzeug 11 eine ausreichend große Aussparung 14 aufweisen, in der sich die sechskantstumpfförmige Verdrehsicherungskontur 6 des Implantataufbaus 3 berührungslos versenken lässt.

Zum Einschleifen wird der Implantaufbau 3 axial gegen das Schleifwerkzeug 11 gedrückt und/oder relativ hierzu verdreht, und zwar um die Verdrehsicherungsachse 10 der Verdrehsicherungskontur 8 des Implantataufbaus 3, die einer Haupt- bzw. Längsachse oder zentralen Mittelachse des Implantataufbaus entsprechen kann.

## Patentansprüche

1. Verfahren zur Herstellung einer Zahnimplantatvorrichtung (1), die ein Implantat (2) und einen Implantataufbau (3) umfasst, wobei das Implantat (2) und der Implantataufbau (3) Anlageflächen (4;5), mit denen sie aneinander setzbar sind, und integral einstückig angeformte, zueinander passende Verdrehsicherungskonturen (6; 8), die im aneinandergesetzen Zustand ein Verdrehen von Implantat (2) und Implantataufbau (3) zueinander verhindern, aufweisen,
**dadurch gekennzeichnet, dass**
die Anlagefläche (4) des Implantats (2) mit einer ersten Schleiflehre (9), die eine Schleiffläche (12) mit der Form der Anlagefläche (5) des Implantataufsatzes (3) besitzt und die Verdrehsicherungskontur (6) des Implantats (2) ausspart, eingeschliffen wird, und
die Anlagefläche (5) des Implantataufbaus (3) mit einer zweiten Schleiflehre (11), die eine Schleiffläche (13) mit der Form der Anlagefläche (4) des Implantats (2) besitzt und die Verdrehsicherungskontur (8) des Implantataufbaus (3) ausspart, eingeschliffen wird.

2. Verfahren nach Anspruch 1, **dadurch gekennzeichnet, dass** die Schleiflehren (9; 11) jeweils nur für einen Einschleifvorgang verwendet werden und/oder für jedes Implantat (2) und jeden Implantataufsatz (3) eine neue, noch unbenutze Schleiflehre (9, 11) verwendet wird.

3. Verfahren nach einem der vorhergehenden Ansprüche, wobei das Einschleifen rotatorisch durch Verdrehen der ersten Schleiflehre (9) relativ zum Implantat (2) um eine Schleifdrehachse, die im wesentlichen koaxial zur Verdrehsicherungsachse (10) der ausgesparten Verdrehsicherungskontur (6) des Implantats (2) verläuft, ausgeführt wird und/oder rotatorisch durch Verdrehen der zweiten Schleiflehre (11) relativ zum Implantatataufbau (3) um eine Schleifdrehachse, die im wesentlichen koaxial zur Verdrehsicherungsachse (10) der ausgesparten Verdrehsicherungskontur (8) des Implantataufbaus (3) verläuft, ausgeführt wird.

4. Verfahren nach einem der vorhergehenden Ansprüche, wobei das Einschleifen unter Verwendung einer Schleifpaste zwischen der ersten Schleiflehre (9) und dem Implantat (2) und/oder zwischen der zweiten Schleiflehre (11) und dem Implantataufbau (3) ausgeführt wird.

5. Verfahren nach einem der vorhergehenden Ansprüche, wobei als erste Schleiflehre (9) eine Schleiflehre aus einem Material, das dem Material des Implantataufbaus (3) und/oder dem Material des Implantats (2) entspricht, verwendet wird, und/oder als zweite Schleiflehre (11) eine Schleiflehre aus einem Material, das dem Material des Implantats (2) und/oder dem Material des Implantataufbaus (3) entspricht, verwendet wird.

6. Verfahren nach einem der vorhergehenden Ansprüche, wobei mit der ersten und zweiten Schleiflehre (9, 11) jeweils konische und/oder zylindrische und/oder plane und/oder eiförmige und/oder rotationssysmmetrische Anlageflächenstücke eingeschliffen werden.

7. Implantatsystem umfassend eine Zahnimplantatvorrichtung sowie ein Schleifwerkzeugsystem zum Einschleifen der Zahnimplantatvorrichtung, wobei
a) die Zahnimplantatvorrichtung ein Implantat (2) und einen Implantataufbau (3) umfasst, wobei das Implantat (2) und der Implantataufbau (3) Anlageflächen (4; 5), mit denen sie aneinander setzbar sind, und integral einstückig angeformte, verdrehfest ineinandersetzbare Verdrehsicherungskonturen (6;8), die im ineinandergreifenden Zustand ein Verdrehen von Implantat (2) und Implantataufbau (3) zueinander verhindern, aufweisen, und
b) das Schleifwerkzeugsystem
- eine erste Schleiflehre (9) zum Einschleifen des Implantats (2), die eine Schleiffläche (12) mit der Form der Anlagefläche (5) des Implantataufsatzes (3) besitzt und die einstückig in das Implantat (2) angeformte Verdrehsicherungskontur (6) des Implantats (2) ausspart, und
- eine zweite Schleiflehre (11) zum Einschleifen des Implantataufbaus (3), die eine Schleiffläche (13) mit der Form der Anlagefläche (4) des Implantats (2) besitzt und die einstückig an den Implantataufbau (3) angeformte Verdrehsicherungskontur (8) des Implantataufbaus ausspart, umfasst wobei die Anlageflächen (4; 5) des Implantats (2) und des Implantataufbaus (3) durch die zwei Schleiflehren (9, 11) zueinander formpassend eingeschliffen sind.

8. Implantatsystem nach dem vorhergehenden Anspruch, wobei die Anlageflächen (4; 5) des Implantats (8) und des Implantataufbaus (3) zueinander formpassend unter Ausspaarung der Verdrehsicherungskonturen (6; 8) eingeschliffen sind.

9. Implantatsystem nach Anspruch 7 oder 8, wobei die
Anlageflächen (4; 5) rotationssymmetrisch zur Verdrehsicherungsachse (10) der Verdrehsicherungskonturen (6; 8), insbesondere konisch und/oder zylindrisch und/oder plan und/oder eiförmig, ausgebildet sind.

10. Implantatsystem nach einem der Ansprüche 7 bis 9, wobei die Verdrehsicherungskonturen (6; 8) als Nut- und/ oder Feder- und/ oder Stern- und/ oder Vieleckfläche, insbesondere als Sechs- oderr Achtkantfläche ausgebildet ist.

## Claims

1. A method for manufacturing a dental implant apparatus (1) that comprises an implant (2) and an implant support (3), wherein the implant (2) and the implant support (3) have contact surfaces (4; 5) with which they can be set next to one another and mutually matching contours providing security against rotation (6; 8) that are molded on integrally in one piece and that prevent a rotation of the implant (2) and of the implant support (3) with respect to one another in the state placed next to one another,
**characterized in that**
the contact surface (4) of the implant (2) is ground using a first grinding gauge (9) that has a grinding surface (12) having the shape of the contact surface (5) of the implant attachment (3) and leaves out the contour providing security against rotation (6) of the implant (2); and
the contact surface (5) of the implant support (3) is ground using a second grinding gauge (11) that has a grinding surface (13) having the shape of the contact surface (4) of the implant (2) and leaves out the contour providing security against rotation (8) of the implant support (3).

2. A method in accordance with claim 1, **characterized in that** the grinding gauges (9; 11) are each only used for one grinding process and/or a new, still unused grinding gauge (9, 11) is used for each implant (2) and for each implant attachment (3).

3. A method in accordance with one of the preceding claims, wherein the grinding is carried out rotationally by rotating the first grinding gauge (9) relative to the implant (2) about a grinding axis of rotation that substantially extends coaxially to the axis of the security against rotation (10) of the left out contour providing security against rotation (6) of the implant (2) and/or is carried out rotationally by rotating the second grinding gauge (11) relative to the implant support (3) about a grinding axis of rotation that substantially extends coaxially to the axis of the security against rotation (10) of the left out contour providing security against rotation (8) of the implant support (3).

4. A method in accordance with one of the preceding claims, wherein the grinding is carried out using a grinding paste between the first grinding gauge (9) and the implant (2) and/or between the second grinding gauge (11) and the implant support (3).

5. A method in accordance with one of the preceding claims, wherein a grinding gauge from a material that corresponds to the material of the implant support (3) and/or to the material of the implant (2) is used as the first grinding gauge (9); and/or a grinding gauge from a material that corresponds to the material of the implant (2) and/or to the material of the implant support (3) is used as the second grinding gauge (11).

6. A method in accordance with one of the preceding claims, wherein respective conical and/or cylindrical and/or planar and/or egg-shaped and/or rotationally symmetrical contact surface sections are ground using the first and second grinding gauges (9, 11).

7. Implant system, comprising a dental implant apparatus as well as a grinding tool system for grinding the dental implant apparatus, wherein
a) the dental implant apparatus comprises an implant (2) and an implant support (3), wherein the implant (2) and the implant support (3) have contact surfaces (4; 5) with which they can be set against one another, and contours providing security against rotation (6; 8) that are molded on integrally in one piece and that can be inserted into one another in a manner secured against rotation, which contours prevent a rotation of the implant (2) and the implant support (3) with respect to one another in the state engaged with one another, and
b) the grinding tool system comprises
- a first grinding gauge (9) for grinding the implant (2) that has a grinding surface (12) having the shape of the contact surface (5) of the implant attachment (3) and that leaves out the contour providing security against rotation (6) of the implant (2) molded in one piece to the implant (2), and
- a second grinding gauge (11) for grinding the implant support (3) that has a grinding surface (13) having the shape of the contact surface (4) of the implant (2) and that leaves out a contour providing security against rotation (8) of the implant support (3) molded in one piece to the implant support (3), wherein the contact surfaces (4; 5) of the implant (2) and of the implant support (3) are ground by the two grinding gauges (9; 11) in a manner matching one another in shape.

8. Implant system in accordance with the preceding claim, wherein the contact surfaces (4; 5) of the implant (8) and of the implant support (3) are ground in a shape matching manner while leaving the contours providing security against rotation (6; 8) open.

9. Implant system in accordance with claim 7 or 8, wherein the contact surfaces (4; 5) are configured rotationally symmetrically with the axis of security against rotation (10) of the contours providing security against rotation (6; 8), in particular conically and/or cylindrically and/or as planar and/or as egg-shaped.

10. Implant system in accordance with one of the claims 7 to 9, wherein the contours providing security against rotation (6; 8) are configured as a groove surface and/or as a spring surface and/or as a star surface and/or as a polygonal surface, in particular as a hexagonal or octagonal surface.

## Revendications

1. Procédé pour la fabrication d'un appareil d'implant dentaire (1) qui comprend un implant (2) et un support d'implant (3), où l'implant (2) et le support d'implant (3) ont des surfaces de contact (4 ; 5) avec lesquelles ils peuvent être placés l'un à côté de l'autre et des contours mutuellement adaptés fournissant une sécurité contre la rotation (6 ; 8) qui sont moulés d'un seul tenant en une pièce et qui empêchent une rotation de l'implant (2) et du support d'implant (3) l'un par rapport à l'autre dans l'état où ils placés l'un à côté de l'autre,
**caractérisé en ce que**
la surface de contact (4) de l'implant (2) est rectifiée à l'aide d'un premier gabarit de rectification (9) qui a une surface de rectification (12) ayant la forme de la surface de contact (5) de la fixation d'implant (3) et qui laisse le contour fournissant une sécurité contre la rotation (6) de l'implant (2) ; et
la surface de contact (5) du support d'implant (3) est rectifiée à l'aide d'un deuxième gabarit de rectification (11) qui a une surface de rectification (13) ayant la forme de la surface de contact (4) de l'implant (2) et qui laisse le contour fournissant une sécurité contre la rotation (8) du support d'implant (3).

2. Procédé conformément à la revendication 1, **caractérisé en ce que** les gabarits de rectification (9 ; 11) sont chacun utilisés pour un seul processus de rectification et/ou un nouveau gabarit de rectification (9, 11), encore non utilisé, est utilisé pour chaque implant (2) et pour chaque fixation d'implant (3).

3. Procédé conformément à l'une des revendications précédentes, où la rectification est effectuée en rotation, par rotation du premier gabarit de rectification (9) par rapport à l'implant (2) autour d'un axe de rotation de rectification qui s'étend sensiblement coaxialement à l'axe de la sécurité contre la rotation (10) du contour qui a été laissé fournissant une sécurité contre la rotation (6) de l'implant (2) et/ou est effectuée en rotation, par rotation du deuxième gabarit de rectification (11) par rapport au support d'implant (3) autour d'un axe de rotation de rectification qui s'étend sensiblement coaxialement à l'axe de la sécurité contre la rotation (10) du contour qui a été laissé fournissant une sécurité contre la rotation (8) du support d'implant (3).

4. Procédé conformément à l'une des revendications précédentes, où la rectification est effectuée à l'aide d'une pâte à rectifier entre le premier gabarit de rectification (9) et l'implant (2) et/ou entre le deuxième gabarit de rectification (11) et le support d'implant (3).

5. Procédé conformément à l'une des revendications précédentes, où un gabarit de rectification en un matériau qui correspond au matériau du support d'implant (3) et/ou au matériau de l'implant (2) est utilisé comme premier gabarit de rectification (9) ; et/ou un gabarit de rectification en un matériau qui correspond au matériau de l'implant (2) et/ou au matériau du support d'implant (3) est utilisé comme deuxième gabarit de rectification (11).

6. Procédé conformément à l'une des revendications précédentes, où des sections de surface de contact respectives coniques et/ou cylindriques et/ou planes et/ou ovoïdes et/ou à symétrie de rotation sont rectifiées à l'aide des premier et deuxième gabarits de rectification (9, 11).

7. Système d'implant, comprenant un appareil d'implant dentaire ainsi qu'un système d'outil de rectification pour la rectification de l'appareil d'implant dentaire, où
a) l'appareil d'implant dentaire comprend un implant (2) et un support d'implant (3), où l'implant (2) et le support d'implant (3) ont des surfaces de contact (4; 5) avec lesquelles ils peuvent être placés l'un contre l'autre, et des contours fournissant une sécurité contre la rotation (6 ; 8) qui sont moulés d'un seul tenant en une pièce et qui peuvent être insérés l'un dans l'autre de manière à empêcher la rotation, lesquels contours empêchent une rotation de l'implant (2) et du support d'implant (3) l'un par rapport à l'autre dans l'état où ils sont en prise l'un avec l'autre, et
b) le système d'outil de rectification comprend
- un premier gabarit de rectification (9) pour la rectification de l'implant (2) qui a une surface de rectification (12) ayant la forme de la surface de contact (5) de la fixation d'implant (3) et qui laisse le contour fournissant une sécurité contre la rotation (6) de l'implant (2) moulé en une pièce sur l'implant (2), et
- un deuxième gabarit de rectification (11) pour la rectification du support d'implant (3) qui a une surface de rectification (13) ayant la forme de la surface de contact (4) de l'implant (2) et qui laisse un contour fournissant une sécurité contre la rotation (8) du support d'implant (3) moulé en une pièce sur le support d'implant (3), où les surfaces de contact (4 ; 5) de l'implant (2) et du support d'implant (3) sont rectifiées par les deux gabarits de rectification (9 ; 11) de manière à ce que leurs formes s'adaptent l'une à l'autre.

8. Système d'implant conformément à la revendication précédente, où les surfaces de contact (4 ; 5) de l'implant (8) et du support d'implant (3) sont rectifiées de manière que les formes s'adaptent tout en laissant ouverts les contours fournissant une sécurité contre la rotation (6 ; 8).

9. Système d'implant conformément à la revendication 7 ou 8, où les surfaces de contact (4 ; 5) sont configurées à symétrie de rotation avec l'axe de sécurité contre la rotation (10) des contours fournissant une sécurité contre la rotation (6 ; 8), en particulier de forme conique et/ou cylindrique et/ou plane et/ou ovoïde.

10. Système d'implant conformément à l'une des revendications 7 à 9, où les contours fournissant une sécurité contre la rotation (6 ; 8) sont configurés comme une surface à rainure et/ou comme une surface à ressort et/ou comme une surface en étoile et/ou comme une surface polygonale, en particulier comme une surface hexagonale ou octogonale.
